# EUROPÄISCHE PATENTSCHRIFT

(11) **EP 2 910 801 B1**
(45) Veröffentlichungstag und Bekanntmachung des Hinweises auf die Patenterteilung: **09.11.2016**
(21) Anmeldenummer: 14156287.6
(22) Anmeldetag: 24.02.2014
(51) Int. Cl.: F16B 19/10

(54) **Blindnietbefestiger**
Blind rivet fastener
Système de fixation à rivet aveugle

(43) Veröffentlichungstag der Anmeldung: 26.08.2015
(73) Patentinhaber: GESIPA Blindniettechnik GmbH, 64546 Mörfelden-Walldorf (DE)
(72) Erfinder: Scholefield, Diana, 64546 Mörfelden-Walldorf (DE); Gärtner, Richard, Dr., 64546 Mörfelden-Walldorf (DE); Booth, Stuart, 64546 Mörfelden-Walldorf (DE); Gross, Johannes, 64546 Mörfelden-Walldorf (DE)
(74) Vertreter: Knoblauch, Andreas

(56) Entgegenhaltungen:
- US-A- 3 858 479
- US-A1- 2013 061 451
- US-B1- 6 551 040

## Beschreibung

Die Erfindung betrifft einen Blindnietbefestiger mit einer Blindniethülse, die ein Setzkopfende mit einem Setzkopf und ein Schaftende aufweist, und mit einem Bolzen, der am Setzkopfende mit einem Aufnahmeabschnitt aus der Blindniethülse herausragt, wobei der Bolzen am Schaftende mit einem Anbringungsabschnitt aus der Blindniethülse herausragt.

Ein derartiger Blindnietbefestiger ist aus US 3 858 479 A bekannt. Der Bolzen weist einen Abschnitt mit einem Linksgewinde und einen Abschnitt mit einem Rechtsgewinde auf, wobei die Abschnitte mit Endbereichen der Blindniethülse verbunden sind. Wenn der Bolzen gedreht wird, bewegen sich die Enden aufeinander zu und bilden zwischen sich einen Schließkopf aus. Der Aufnahmeabschnitt kann dann abgeschnitten werden.

Ein Blindnietbefestiger wird, wenn der Bolzen mit einem Gewinde am Aufnahmeabschnitt versehen ist, auch als "Blindnietschraube" bezeichnet und ist unter der Typbezeichnung BNS von der GESIPA-Blindniettechnik GmbH, Mörfelden-Walldorf, Bundesrepublik Deutschland, erhältlich.

Ein derartiger Blindnietbefestiger dient dazu, eine Befestigungsmöglichkeit an Bauteilen, Wänden, Platten oder dergleichen zu schaffen, die beispielsweise zum Anschweißen eines Gewindebolzens oder dem Durchschrauben einer Schraube nicht geeignet wären. Der Blindnietbefestiger wird dann mit seiner Blindniethülse durch eine entsprechende Öffnung in der Wand oder der Platte geführt, bis der Setzkopf an dem Bauteil, der Wand oder Platte anliegt. Durch einen Zug auf den Bolzen wird der Schaft der Blindniethülse so verformt, dass sich auf der vom Setzkopf abgewandten Seite der Wand ein Schließkopf ausbildet. Damit ist die Blindniethülse in der Wand befestigt. Der Aufnahmeabschnitt des Bolzens steht zu Befestigungszwecken zur Verfügung.

US 6 551 040 B1 zeigt einen Blindnietbefestiger mit einer Blindniethülse und einem Bolzen. Der Bolzen weist einen Scherring auf, der am Schließkopfende der Niethülse anliegt. Wenn der Bolzen mit einer Zugkraft belastet wird, dann wirkt der Scherring auf die Niethülse und bewirkt dadurch ein Ausbilden des Schließkopfes. Wenn der Schließkopf ausgebildet ist, dann schert der Scherring ab. Ein gerillter Abschnitt des Bolzens tritt dann in den Scherring ein und sichert ihn gegen Verlust. Bei einer weiteren Erhöhung der Zugkraft reißt der aus dem Setzkopf herausragende Teil des Bolzens ab.

US 2013/0061451 A1 zeigt einen zweiteiligen Blindnietbefestiger. Ein Bolzen ist in eine Niethülse eingeschraubt. An die Niethülse schließt sich eine weitere Hülse an, die mit einem konisch angeschrägten Ende der Niethülse zusammenwirkt. Am von der Niethülse abgewandten Ende der Hülse ist eine Mutter angeordnet, die zur Hülse drehfest ist und über eine Gewindepaarung mit dem Bolzen in Eingriff steht. Wenn der Bolzen gedreht wird, dann wird die Hülse über den konischen Abschnitt der Blindniethülse geschoben und weitet sich dadurch auf. Wenn ein vorbestimmtes Drehmoment erreicht wird, dann schärt der Bolzen ab.

Der Erfindung liegt die Aufgabe zugrunde, Befestigungsmöglichkeiten des Blindnietbefestigers zu erweitern.

Diese Aufgabe wird bei einem Blindnietbefestiger der eingangs genannten Art dadurch gelöst, dass ein Schließkopf durch Zug auf den Bolzen ausbildbar ist und der Bolzen in der Blindniethülse drehfest befestigt ist.

Damit stehen nach dem Setzen des Blindnietbefestigers in der Wand zwei Befestigungsmöglichkeiten zur Verfügung und zwar auf beiden Seiten der Wand. Auf der einen Seite der Wand kann man den Aufnahmeabschnitt verwenden, um Gegenstände hier zu befestigen. Auf der anderen Seite der Wand steht der Anbringungsabschnitt zur Verfügung, um ebenfalls Gegenstände zu befestigen. Die Begriffe "Aufnahmeabschnitt" und "Anbringungsabschnitt" wurden gewählt, um diese beiden Abschnitte unterscheiden zu können. Theoretisch können sie gleich ausgebildet sein. Sie können aber auch unterschiedlich ausgebildet sein. Der Bolzen ist in der Blindniethülse drehfest befestigt. Dies ist insbesondere dann von Vorteil, wenn eine Befestigungsgeometrie oder beide Befestigungsgeometrien als Gewinde ausgebildet sind. In diesem Fall lässt sich eine Gewindemutter leichter auf das Gewinde aufschrauben, weil das Risiko, dass der Bolzen sich mitdreht, praktisch nicht gegeben ist.

Vorzugsweise weist der Aufnahmeabschnitt eine Aufnahme-Befestigungsgeometrie und/oder der Anbringungsabschnitt eine Anbringungs-Befestigungsgeometrie auf. Mit einer derartigen Befestigungsgeometrie wird das Anbringen von Gegenständen oder Vorrichtungen an den jeweiligen Abschnitten erleichtert.

Vorzugsweise weisen sowohl der Aufnahmeabschnitt als auch der Anbringungsabschnitt jeweils eine Befestigungsgeometrie auf und die Aufnahme-Befestigungsgeometrie und die Anbringungs-Befestigungsgeometrie sind unterschiedlich ausgebildet. Man kann also die beiden Befestigungsgeometrien an die jeweils gewünschten Aufgaben anpassen, so dass man eine hohe Flexibilität bei der Verwendung des Blindnietbefestigers erhält.

Vorzugsweise ist zumindest eine der Befestigungsgeometrien als Gewinde ausgebildet. Wenn ein Gewinde vorliegt, kann der zu befestigende Gegenstand auf das Gewinde aufgefädelt werden und dann mit einer Gewindemutter, die auf das Gewinde aufgeschraubt wird, befestigt werden.

Vorzugsweise sind beide Befestigungsgeometrien als Gewinde ausgebildet und eine der Befestigungsgeometrien weist eine andere Gewindesteigung als die andere Befestigungsgeometrie auf. So kann beispielsweise ein Gewinde als Grobgewinde und ein Gewinde als normales Gewinde oder Feingewinde ausgebildet sein. Es ist auch möglich, ein Gewinde als metrisches Gewinde und das andere Gewinde als Zoll-Gewinde auszubilden.

Vorzugsweise sind der Bolzen und die Blindniethülse durch eine Gewindepaarung miteinander verbunden. Das bedeutet, dass der Bolzen zumindest im Bereich der Blindniethülse ein Außengewinde aufweist, in das ein Innengewinde der Blindniethülse eingreift. Dieses Innengewinde kann bei der Herstellung des Blindnietbefestigers beispielsweise auch dadurch gebildet sein, dass die Blindniethülse mit ihrer Innenseite auf das Außengewinde aufgepresst wird.

Hierbei ist bevorzugt, dass der Bolzen im Bereich der Gewindepaarung ein Außengewinde aufweist, das sich in einer Befestigungsgeometrie fortsetzt. Man kann also eines der beiden Gewinde zusätzlich verwenden, um die Blindniethülse und den Bolzen miteinander zu verbinden.

In einer alternativen Ausgestaltung ist vorgesehen, dass mindestens eine Befestigungsgeometrie als Rillenanordnung ausgebildet ist. Die Rillenanordnung kann eine oder mehrere umlaufende Rillen oder Nuten aufweisen, in die dann eine Befestigungseinrichtung eines Gegenstandes einrasten kann.

In einer anderen alternativen Ausgestaltung kann vorgesehen sein, dass mindestens eine Befestigungsgeometrie als Vorsprungsanordnung ausgebildet ist. Diese Vorsprungsanordnung kann beispielsweise eine Anlaufschräge aufweisen, um ein Aufschieben einer Befestigunseinrichtung eines Gegenstandes und ein nachfolgendes Einrasten zu erleichtern.

Vorzugsweise weist der Aufnahmeabschnitt einen anderen Durchmesser als der Anbringungsabschnitt auf. Auch auf diese Weise ist es möglich, die beiden Abschnitte an unterschiedliche Befestigungsmöglichkeiten anzupassen.

Vorzugsweise weist der Bolzen eine Durchmesservergrößerung auf, die an einer Stufe der Blindniethülse anliegt. Man kann beispielsweise vorsehen, dass der Bolzen mit der Durchmesservergrößerung mit einer gewissen Vorspannung an der Stufe der Blindniethülse anliegt. Diese Vorspannung erschwert beispielsweise das Herausschrauben des Bolzens aus der Blindniethülse.

In einer alternativen oder zusätzlichen Ausgestaltung kann vorgesehen sein, dass der Bolzen eine Durchmesservergrößerung aufweist, die am Schaftende anliegt. In diesem Fall kann man die Durchmesservergrößerung des Bolzens auch verwenden, um die zur Ausbildung des Schließkopfes notwendigen Kräfte auf die Blindniethülse zu übertragen.

Schließlich ist es in einer zusätzlichen oder alternativen Ausgestaltung auch möglich, dass der Anbringungsabschnitt mit einem Flansch versehen ist, der am Schaftende anliegt. In diesem Fall kann der Durchmesser des Anbringungsabschnitts durchaus kleiner sein als der Durchmesser des Aufnahmeabschnitts.

Die Erfindung wird im Folgenden anhand von bevorzugten Ausführungsbeispielen in Verbindung mit der Zeichnung beschrieben. Hierin zeigen:
- Fig. 1: eine erste Ausgestaltung eines Blindbefestigers,
- Fig. 2: eine zweite Ausgestaltung eines Blindbefestiges,
- Fig. 3: eine dritte Ausgestaltung eines Blindbefestigers, teilweise im Schnitt, und
- Fig. 4: eine vierte Ausgestaltung eines Blindbefestigers.

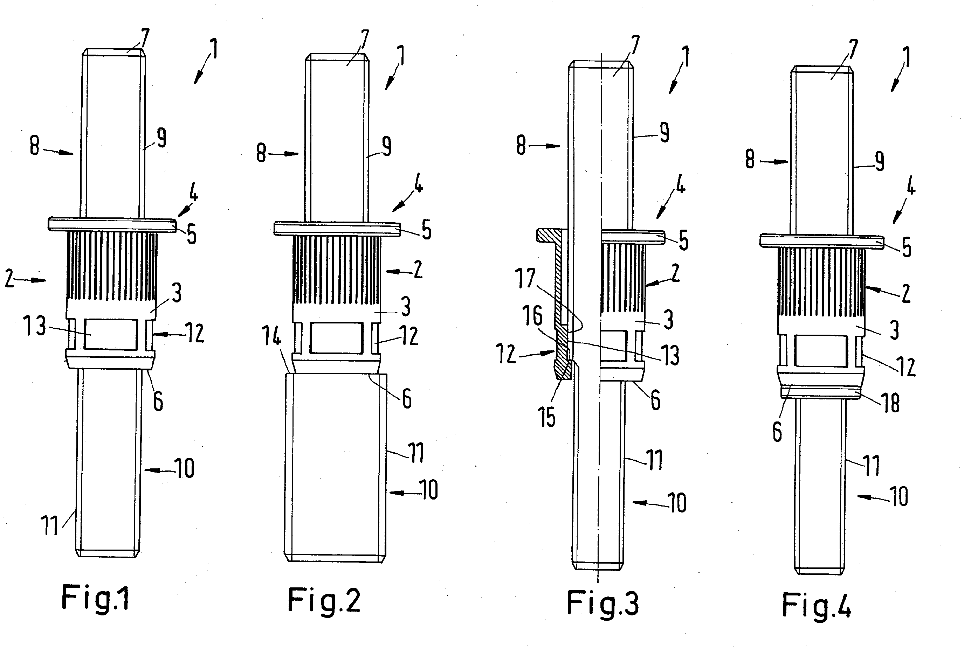

Fig. 1 zeigt einen Blindbefestiger 1 mit einer Blindniethülse 2, die einen Schaft 3, ein Setzkopfende 4 mit einem Setzkopf 5 und ein Schaftende 6 aufweist.

Ferner weist der Blindbefestiger einen Bolzen 7 auf, der mit einem Aufnahmeabschnitt 8 am Setzkopfende 4 aus der Blindniethülse 2 herausragt. Der Aufnahmeabschnitt 8 ist mit einem Außengewinde 9 versehen.

Der Bolzen 7 ragt mit einem Anbringungsabschnitt 10 am Schaftende 6 aus der Blindniethülse 2 heraus. Der Anbringungsabschnitt 10 weist ein Außengewinde 11 auf.

Im vorliegenden Ausführungsbeispiel hat der Bolzen 7 ein durchgehendes Gewinde, das sowohl das Außengewinde 9 am Aufnahmeabschnitt 8 als auch das Außengewinde 11 am Anbringungsabschnitt 10 bildet. Auf dieses Gewinde 9, 11 ist der Schaft 3 der Blindniethülse 2 in einem Befestigungsabschnitt 12 aufgepresst, so dass der Bolzen 7 und die Blindniethülse 2 durch eine Gewindepaarung miteinander verbunden sind. Der Bolzen 7 könnte damit theoretisch aus der Blindniethülse 2 herausgeschraubt werden. Um dies zu verhindern, kann im Befestigungsabschnitt 12 beispielsweise ein Schweißpunkt 13 vorgesehen sein, so dass der Bolzen 7 und die Blindniethülse 2 drehfest miteinander verbunden sind. Anstelle eines Schweißpunkts 13 kann man auch vorsehen, dass die Blindniethülse 2 mit dem Bolzen 7 verklemmt ist, so dass auch hier eine Drehung zwischen dem Bolzen 7 und der Blindniethülse 2 nicht möglich ist.

Das Außengewinde 9 bildet eine Aufnahme-Befestigungsgeometrie. Das Außengewinde 11 auf dem Anbringungsabschnitt 10 bildet eine Anbringungs- Befestigungsgeometrie. Die beiden Außengewinde 9, 11 können, wie oben angegeben, gleich ausgebildet sein. Sie können aber auch unterschiedlich ausgebildet sein. Beispielsweise kann das eine der beiden Außengewinde 9, 11 als metrisches Gewinde und das andere Außengewinde 11, 9 als Zoll-Gewinde ausgebildet sein. Man kann auch eines der beiden Außengewinde 9, 11 als Grobgewinde und das andere Außengewinde 11,9 als normales oder als Feingewinde ausbilden oder man kann auf andere Weise Gewinde mit unterschiedlichen Steigungen verwenden.

Anstelle von Außengewinden kann man natürlich auch andere Befestigungsgeometrien verwenden, beispielsweise eine Rillenanordnung mit einer oder mehreren Rillen oder eine Vorsprungsanordnung mit einem oder mehreren Vorsprüngen. Die konkrete Art der Ausbildung der Befestigungsgeometrien richtet sich nach dem gewünschten Anwendungszweck. Es ist auf jeden Fall zweckmäßig, wenn an der Befestigungsgeometrie des Aufnahmeabschnitts 8 auch ein Setzwerkzeug angreifen kann und zwar dergestalt, dass es einen zum Ausbilden eines Schließkopfes ausreichenden Zug auf den Bolzen 7 ausüben kann.

Der Schaft 3 der Blindniethülse 2 kann, wie dargestellt, gerändelt sein. Es ist aber auch möglich, den Schaft 3 mit einem Teilsechskant oder einem Vollsechskant oder einer anderen Polygon-Form auszubilden. Es ist auch möglich, den Schaft 3 rund oder zylinderförmig auszubilden. Dies ist insbesondere dann günstig, wenn die Befestigungsgeometrie nur auf Zug oder Druck belastet werden und zum Befestigen von Gegenständen keine Drehung erforderlich ist, gegen die der Bolzen gesichert werden müsste. Bei einer runden Schaftform ist der Aufwand zum Herstellen der Aufnahmeöffnung für den Blindbefestiger 1 relativ gering.

Der Schließkopf 5 kann als Flachkopf, als Kleinkopf oder als Senkkopf ausgebildet sein. Andere Formen sind natürlich ebenfalls möglich.

In der Ausgestaltung der Fig. 1 haben der Aufnahmeabschnitt 8 und der Anbringungsabschnitt 10 den gleichen Außendurchmesser.

In Fig. 2 ist eine zweite Ausführungsform eines Blindbefestigers dargestellt, bei dem gleiche Elemente mit den gleichen Bezugszeichen versehen sind.

In diesem Fall weist der Anbringungsabschnitt 10 einen größeren Durchmesser als der Aufnahmeabschnitt 8 auf. Dementsprechend weist der Bolzen 7 eine Durchmesservergrößerung 14 auf, die am Schaftende 6 des Schafts 3 der Blindniethülse 2 anliegt. In diesem Fall kann die Durchmesservergrößerung 14 verwendet werden, um bei Aufbringen einer Zugkraft auf den Bolzen 7, die aus der Blindniethülse 2 herausgerichtet ist, einen entsprechenden Druck auf das Schaftende 6 auszuüben, der letztendlich zu einer Verformung des Schaftes 3 der Blindniethülse 2 und zur Ausbildung des Schließkopfes führt.

Fig. 3 zeigt eine dritte Ausgestaltung eines Blindbefestigers 1, bei dem gleiche Elemente mit den gleichen Bezugszeichen versehen worden sind.

Hier weist der Anbringungsabschnitt 10 einen geringeren Durchmesser als der Aufnahmeabschnitt 8 auf. Dementsprechend weist der Bolzen 7 eine Durchmesservergrößerung 15 auf, die an einer Stufe 16 in der Blindniethülse 2 anliegt. Die Stufe 16 befindet sich am Ende des Innengewindes 17, das im Befestigungsabschnitt 12 der Blindniethülse 2 ausgebildet ist. Wenn der Bolzen mit einem höheren Drehmoment in die Blindniethülse 2 eingeschraubt worden ist, dann ergibt sich zwischen der Durchmesservergrößerung 15 und der Stufe 16 eine gewisse Vorspannung, die in vielen Fällen ausreicht, um eine Verdrehsicherung zu bewirken. Trotzdem kann ein Schweißpunkt 13 vorgesehen sein, um eine Verdrehsicherung sicherzustellen.

Fig. 4 zeigt eine vierte Ausführungsform eines Blindbefestigers 1, bei dem gleiche Elemente mit den gleichen Bezugszeichen versehen sind. Auch in diesem Fall ist der Außendurchmesser des Anbringungsabschnitts 10 kleiner als der Außendurchmesser des Aufnahmeabschnitts 8. Auf dem Anbringungsabschnitt 10 ist ein Flansch 18 angeordnet, der am Schaftende 6 anliegt. Dieser Flansch 18 kann verwendet werden, um ausreichende Verformungskräfte vom Bolzen 7 auf den Schaft 3 der Blindniethülse 2 zu übertragen.

Wenn die Befestigungsgeometrie des Anbringungsabschnitts 10, wie dargestellt, als Außengewinde 11 ausgebildet ist, dann kann man eine Verdrehsicherung auch dadurch bewirken, dass man den Ring 18 mit einem ausreichend großen Moment gegen den Schaft 3 der Blindniethülse 2 schraubt, so dass der Ring sozusagen eine "Kontermutter" bildet. In diesem Fall wäre der Schweißpunkt 13, wie dargestellt, entbehrlich.

Natürlich kann man in allen Ausführungsformen anstelle eines Schweißpunkts 13 auch andere Möglichkeiten zur Verdrehsicherung verwenden, beispielsweise einen Klebstoff oder eine gezielte Gewindeverformung.

## Patentansprüche

1. Blindnietbefestiger (1) mit einer Blindniethülse (2), die ein Setzkopfende (4) mit einem Setzkopf (5) und ein Schaftende (6) aufweist, und mit einem Bolzen (7), der am Setzkopfende (4) mit einem Aufnahmeabschnitt (8) aus der Blindniethülse (2) herausragt, wobei der Bolzen (7) am Schaftende (6) mit einem Anbringungsabschnitt (10) aus der Blindniethülse (2) herausragt, **dadurch gekennzeichnet, dass** ein Schließkopf durch Zug auf den Bolzen (7) ausbildbar ist und der Bolzen (7) in der Blindniethülse (2) drehfest befestigt ist.

2. Blindnietbefestiger nach Anspruch 1, **dadurch gekennzeichnet, dass** der Aufnahmeabschnitt (8) eine Aufnahme - Befestigungsgeometrie (9) und/oder der Anbringungsabschnitt (10) eine Anbringungs - Befestigungsgeometrie (11) aufweist.

3. Blindnietbefestiger nach Anspruch 2, **dadurch gekennzeichnet, dass** sowohl der Aufnahmeabschnitt (8) als auch der Anbringungsabschnitt (10) jeweils eine Befestigungsgeometrie (9, 11) aufweisen und die Aufnahme - Befestigungsgeometrie (9) und die Anbringungs - Befestigungsgeometrie (11) unterschiedlich ausgebildet sind.

4. Blindnietbefestiger nach Anspruch 2 oder 3, **dadurch gekennzeichnet, dass** zumindest eine der Befestigungsgeometrien (9, 11) als Gewinde ausgebildet ist.

5. Blindnietbefestiger nach Anspruch 4, **dadurch gekennzeichnet, dass** beide Befestigungsgeometrien (9, 11) als Gewinde ausgebildet sind und eine der Befestigungsgeometrien (9, 11) eine andere Gewindesteigung als die andere Befestigungsgeometrie (11, 9) aufweist.

6. Blindnietbefestiger nach einem der Ansprüche 1 bis 5, **dadurch gekennzeichnet, dass** der Bolzen (7) und die Blindniethülse (2) durch eine Gewindepaarung miteinander verbunden sind.

7. Blindnietbefestiger nach Anspruch 6, **dadurch gekennzeichnet, dass** der Bolzen (7) im Bereich der Gewindepaarung ein Außengewinde aufweist, das sich in einer Befestigungsgeometrie fortsetzt.

8. Blindnietbefestiger nach einem der Ansprüche 1 bis 3, **dadurch gekennzeichnet, dass** mindestens eine Befestigungsgeometrie als Rillenanordnung ausgebildet ist.

9. Blindnietbefestiger nach einem der Ansprüche 1 bis 3, **dadurch gekennzeichnet, dass** mindestens eine Befestigungsgeometrie als Vorsprungsanordnung ausgebildet ist.

10. Blindnietbefestiger nach einem der Ansprüche 1 bis 9, **dadurch gekennzeichnet, dass** der Aufnahmeabschnitt (8) einen anderen Durchmesser als der Anbringungsabschnitt (10) aufweist.

11. Blindnietbefestiger nach einem der Ansprüche 1 bis 10, **dadurch gekennzeichnet, dass** der Bolzen (7) eine Durchmesservergrößerung (15) aufweist, die an einer Stufe (16) der Blindniethülse (2) anliegt.

12. Blindnietbefestiger nach einem der Ansprüche 1 bis 11, **dadurch gekennzeichnet, dass** der Bolzen (7) eine Durchmesservergrößerung (14) aufweist, die am Schaftende (6) anliegt.

13. Blindnietbefestiger nach einem der Ansprüche 1 bis 12, **dadurch gekennzeichnet, dass** der Anbringungsabschnitt (10) mit einem Flansch (18) versehen ist, der am Schaftende (6) anliegt.

## Claims

1. Blind rivet fastener (1) comprising a blind rivet sleeve (2) having a set head end (4) with a set head (5) and a shank end (6); and a stud (7) projecting from the head end (4) with a receiving section (8) wherein the stud (7) projects from the shank end (6) with an attachment section (10) **characterized in that** a closing head can be formed via a pull on the stud (7) and the stud (7) is non-rotatably fastened in the blind rivet sleeve (2).

2. Blind rivet fastener according to claim 1, **characterized in that** the receiving section (8) comprises a receiving/fastening geometry (9) and/or the attachment section (10) comprises an attachment/fastening geometry (11).

3. Blind rivet fastener according to claim 2, **characterized in that** both the receiving section (8) and also the attachment section (10) comprise a fastening geometry (9, 11) and the receiving/fastening geometry (9) and the attachment/fastening geometry are embodied differently.

4. Blind rivet fastener according to claim 2 or 3, **characterized in that** at least one of the fastening geometries (9, 11) is embodied as a thread.

5. Blind rivet fastener according to claim 5, **characterized in that** both fastening geometries (9, 11) are embodied as a thread and one of the fastening geometries(9, 11) has a thread pitch different than a thread pitch of the other fastening geometry (9, 11).

6. Blind rivet fastener according to any of claims 1 to 5, **characterized in that** the stud (7) and the blind rivet sleeve (2) are connected to one another by a thread pairing.

7. Blind rivet fastener according to claim 6, **characterized in that** the stud (7) comprises, in a region of the thread pairing, an external thread which continues in a fastening geometry.

8. Blind rivet fastener according to any of claims 1 to 3, **characterized in that** at least one of the fastening geometries is embodied as a groove arrangement.

9. Blind rivet fastener according to any of claims 1 to 3, **characterized in that** at least one of the fastening geometries is embodied as a projection arrangement.

10. Blind rivet fastener according to any of claims 1 to 9, **characterized in that** the receiving section (8) has a diameter different than a diameter of the attachment section (10).

11. Blind rivet fastener according to any of claims 1 to 10, **characterized in that** the stud (7) has a diameter enlargement (15) bearing against a step (16) of the blind rivet sleeve (2).

12. Blind rivet fastener according to any of claims 1 to 11, **characterized in that** the stud (7) has a diameter enlargement (14) bearing against the shank end (6).

13. Blind rivet fastener according to any of claims 1 to 12, **characterized in that** the attachment section (10) comprises a flange (18) bearing against the shank end (6).

## Revendications

1. Système de fixation à rivet aveugle (1) comprenant une douille de rivet aveugle (2), qui présente une extrémité de tête de pose (4) avec une tête de pose (5) et une extrémité de tige (6), et comprenant un goujon (7), qui dépasse de la douille de rivet aveugle (2) au niveau de l'extrémité de tête de pose (4) par une section de réception (8), dans lequel le goujon (7) sort, au niveau de l'extrémité de tige (6), de la douille de rivet aveugle (2) par une section de mise en place (10), **caractérisé en ce qu'**une tête de fermeture peut être réalisée par traction sur le goujon (7) et le goujon (7) est fixé de manière solidaire en rotation dans la douille de rivet aveugle (2).

2. Système de fixation à rivet aveugle selon la revendication 1, **caractérisé en ce que** la section de réception (8) présente une géométrie de fixation - réception (9), et/ou la section de mise en place (10) présente une géométrie de fixation - mise en place.

3. Système de fixation à rivet aveugle selon la revendication 2, **caractérisé en ce qu'**aussi bien la section de réception (8) que la section de mise en place (10) présentent respectivement une géométrie de fixation (9, 11), et la géométrie de fixation - réception (9) et la géométrie de fixation - mise en place (11) sont réalisées de manière différente.

4. Système de fixation à rivet aveugle selon la revendication 2 ou 3, **caractérisé en ce qu'**au moins une des géométries de fixation (9, 11) est réalisée sous la forme d'un filetage.

5. Système de fixation à rivet aveugle selon la revendication 4, **caractérisé en ce que** les deux géométries de fixation (9, 11) sont réalisées sous la forme d'un filetage, et l'une des géométries de fixation (9, 11) présente un autre pas de filetage que l'autre géométrie de fixation (11, 9).

6. Système de fixation à rivet aveugle selon l'une quelconque des revendications 1 à 5, **caractérisé en ce que** le goujon (7) et la douille de rivet aveugle (2) sont reliés l'une à l'autre par un appariement de filetages.

7. Système de fixation à rivet aveugle selon la revendication 6, **caractérisé en ce que** le goujon (7) présente, dans la zone de l'appariement de filetages, un filetage extérieur, qui se prolonge en une géométrie de fixation.

8. Système de fixation à rivet aveugle selon l'une quelconque des revendications 1 à 3, **caractérisé en ce qu'**au moins une géométrie de fixation est réalisée sous la forme d'un ensemble de rainures.

9. Système de fixation à rivet aveugle selon l'une quelconque des revendications 1 à 3, **caractérisé en ce qu'**au moins une géométrie de fixation est réalisée sous la forme d'un ensemble de parties faisant saillie.

10. Système de fixation à rivet aveugle selon l'une quelconque des revendications 1 à 9, **caractérisé en ce que** la section de réception (8) présente un autre diamètre que la section de mise en place (10).

11. Système de fixation à rivet aveugle selon l'une quelconque des revendications 1 à 10, **caractérisé en ce que** le goujon (7) présente un agrandissement de diamètre (15), qui repose au niveau d'un palier (16) de la douille de rivet aveugle (2).

12. Système de fixation à rivet aveugle selon l'une quelconque des revendications 1 à 11, **caractérisé en ce que** le goujon (7) présente un agrandissement de diamètre (14), qui repose au niveau de l'extrémité de tige (6).

13. Système de fixation à rivet aveugle selon l'une quelconque des revendications 1 à 12, **caractérisé en ce que** la section de mise en place (10) est dotée d'une bride (18), qui repose au niveau de l'extrémité de tige (6).
